# EUROPEAN PATENT APPLICATION

(11) **EP 1 009 176 A2**
(43) Date of publication of application: **14.06.2000**
(21) Application number: 99309583.5
(22) Date of filing: 30.11.1999
(51) Int. Cl.: H04Q 7/24

(54) **Methods and apparatus for route optimisation in a communications system**

(30) Priority: 07.12.1998 US 206428
(71) Applicant: LUCENT TECHNOLOGIES INC., Murray Hill, New Jersey 07974-0636 (US)
(72) Inventor: Budka, Kenneth Carl, Marlboro, New Jersey 07746 (US); Chuah,Mooi Choo, Eatontown, New Jersey 07724 (US); Yue, On-Ching, Middletown, New Jersey 07748 (US)
(74) Representative: Watts, Christopher Malcolm Kelway, Dr.

(57) **Abstract**

A route optimization technique in a GPRS network includes establishing a gateway GPRS support node in a visiting public land mobile network in which a roaming mobile station is currently located. Specifically, a tunnel is formed between the gateway GPRS support node and a serving GPRS support node to which the mobile station is in direct communication over a radio link. In this manner, external corresponding hosts may route packets to the gateway GPRS support node, rather than the GPRS support node in the mobile station's home public mobile network, as is done in conventional GPRS networks. Advantageously, a shorter path is established for transfer of packets between a mobile station and a corresponding host. A similar route optimization technique is provided in a CDPD network, wherein a home mobile data-intermediate system node (local HMD-IS) in the foreign (visiting) network serves as a gateway node to the roaming mobile-end system.

## Description

### Field of the Invention

The present invention relates to methods and apparatus for providing mobility management in packet-based communications systems and, more particularly, to route optimization in General Packet Radio Service and Cellular Digital Packet Data systems.

### Background of the Invention

Within the last decade, advances in computer systems, wireless communications and data networking have brought mobile data networking within reach of the masses. Mobile data networking enhances data applications such as, for example, email, client-server applications, electronic form, order entry systems, and other wired-line data communications applications. Mobile data adds a new dimension to Internet applications, a dimension developers of a new breed of mobility-empowered applications are beginning to probe.

Introduction of Enhanced Throughput Cellular (ETC), MNP10, and other data link protocols specially tailored to the cellular environment have placed data rates on the order of 10 kbps. The high connect time charges characteristic of circuit switched cellular service, however, are not always well-suited for the bursty data transfers typical of many data applications. Addressing this need, the cellular industry has developed two wireless packet data systems to support mobile computing with greater multiplexing efficiency. Cellular Digital Packet Data (CDPD) was designed as an overlay data network to the Advanced Mobile Phone System (AMPS), while General Packet Radio Service (GPRS) was developed for the Global System for Mobile Communications (GSM). The design of such wireless packet data networks spans the physical layer (frequency allocation, modulation and coding), the link layer (medium access control, error recovery and flow control), and the network layer (e.g., Internet Protocol (IP)).

Mobility management encompasses the tracking of mobile hosts as they move throughout a network and all interworking functions which mask mobility from Internet applications. Mobility management is one of the cornerstones of current and future wireless data networks. To satisfy the mobile users need for more bandwidth and more services, there are new wireless standards being proposed and evaluated, including PDC mobile packet data communication system (PDC-P) based on the Personal Digital Cellular system (PDC) in Japan, and Universal Mobile Telephone Service (UMTS). Understanding and contrasting the mobility management approaches used by current networks can help identify opportunities for improvement, improvements which may be incorporated into existing and future wireless data networking technologies.

There are currently three mobility management approaches: the proposed Mobile-IP protocol developed by the Internet Engineering Task Force (IETF), CDPD and GPRS. Certain salient features are shared by all three mobility management approaches. A discussion of their respective approaches used to provide various mobility management features will now follow.

### I. Mobile IP

An overview of the basic IETF Mobile IP protocol is described in IEFT RFC2002, "IP Mobility Support," C. Perkins (ed.), October 1996. The IETF Mobile IP protocol is not a complete mobility management solution: it merely provides a network layer solution. At a high level, the basic IETF Mobile IP sets up routing entries at appropriate nodes in the network to route packets to mobile hosts.

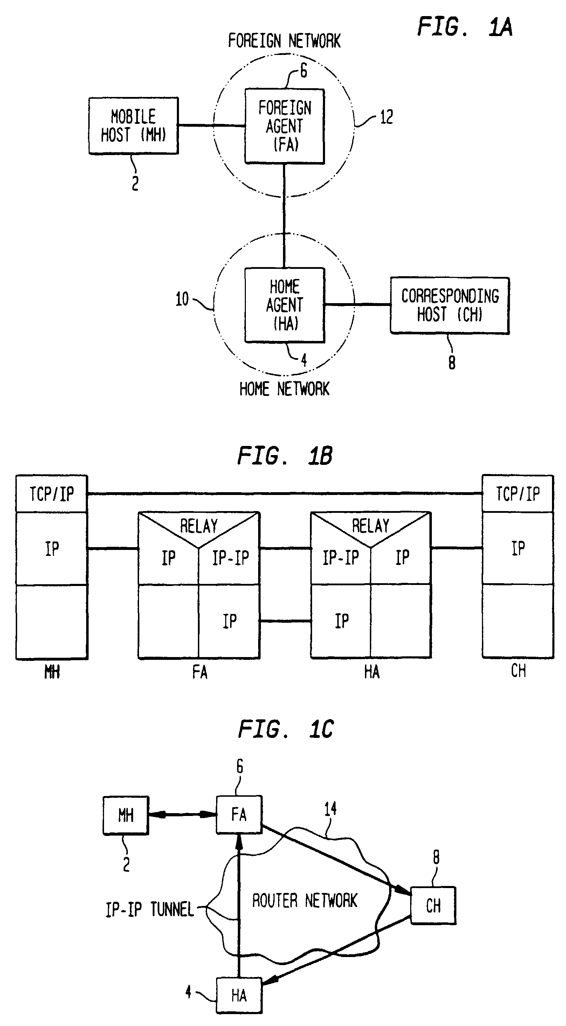

Referring to FIG. 1A, a block diagram of the Mobile IP architecture is shown. There are four network entities in a network that supports IETF Mobile IP:
- Mobile Host (MH) 2: A host or router that changes its point of attachment from one subnetwork to another. A mobile host may change its location without changing its IP address.
- Home Agent (HA) 4: A router in the mobile host's home network 10 which tunnels datagrams for delivery to the MH when it is away from home. The HA maintains current location information for the mobile host.
- Foreign Agent (FA) 6: A router in a mobile host's visiting or foreign network 12 which provides routing services to the mobile host while registered. The foreign agent delivers datagrams to the mobile host that were tunneled by the home agent.
- Corresponding Host (MH) 8: A host or router with which a mobile host may communicate.

Mobile IP's protocol stack is shown in FIG. 1B. Key features of the protocol stack are:
- Transport Layer - No assumptions on transport protocol were made during the design of Mobile IP.
- Network Layer - Mobile IP provides only native support of only IP. Mobiles are assigned a fixed home address by Mobile IP service providers.
- Link and Physical Layers - Mobile IP makes no assumption regarding the link and physical layers. It only requires a direct link between the foreign agent and the mobile host.

The basic Mobile IP uses triangular routing to send forward IP packets to roaming mobile hosts. Each mobile host is assigned a unique home address. Hosts communicating with a mobile host (MH) are known as the corresponding or correspondent hosts (CH). In sending an IP packet to a mobile host, a corresponding host always addresses the packet to the mobile host's home address, regardless of the location of the mobile.

Each mobile host must have a home agent (HA) on its home network that maintains the mobile host's current location. This location is identified as a care-of address, and the association between a mobile host's home address and its current care-of address is called a mobility binding. Each time the mobile host obtains a new care-of address, it must register the new binding with its home agent so that the home agent can forward upcoming traffic destined for the mobile host that serves.

A mobile host, when connecting to a network away from its home network, may be assigned a care-of address in one of two ways:
- using Foreign Agent's IP address
- obtaining local address via a Dynamic Host Configuration Protocol (DHCP) server. DHCP consists of a protocol to deliver host specific configuration parameters from a DHCP server to a host and a mechanism for allocation of network addresses to hosts.

### Using a Foreign Agent's IP Address

Normally, the mobile host will attempt to discover a foreign agent within the network being visited using an agent discovery protocol. The agent discovery protocol operates as an extension to the existing ICMP (Internet Control Message Protocol) router discovery protocol. It provides a means for a mobile host to detect when it has moved from one network to another, and to detect when it has returned home. The mobile host then registers with the foreign agent and one of the foreign agent's IP addresses is now used as the mobile host's care-of-address. The foreign agent acts as a local forwarder for packets arriving for the mobile host.

### Using a Temporarily Assigned Local Address

Alternatively, if the mobile host can obtain a temporary local address within the visiting network, the mobile host may use this temporary address as its care-of address. This care-of address is referred to as the co-located care-of address. The mobile host in this case will register this co-located care-of address directly with the home agent.

### Data Forwarding

When a mobile host is away from its home network, a mobile-host's home agent uses proxy ARP to intercept packets addressed to the mobile host. By proxy ARP, we mean the home agent will answer the ARP request sent to the home link on behalf of the mobile host. Then, the home agent forwards all packets for the mobile host to its current location. The home agent achieves this by tunneling each intercepted packet to the mobile host's current care-of address. By tunneling, we mean a new IP header is added to the original IP packet such that the source address is the home agent's address, the destination address is the mobile host's current care-of address.

If the care-of address is provided by a foreign agent, the foreign agent removes any tunneling headers from the packet and delivers the packet locally to the mobile host by transmitting it over the local network on which the mobile host is registered. If the mobile host is using a locally obtained temporary address as a care-of address, the tunneled packet is delivered directly to the mobile host. The mobile host is expected to remove the tunnel headers before interpreting the content.

### Beaconing Protocol: Agent Advertisement

Home and foreign agents periodically advertise their presence by broadcasting an agent advertisement message on each network to which they are connected and for which they are configured to provide service. Home and foreign agents may be provided by separate nodes on a network. Alternatively, a single node may implement the functionality of both a home and a foreign agent.

By listening to the periodic agent advertisements, a mobile host can determine if it is currently connected to its home or a foreign link, and whether it has moved from one link to another. In addition, a mobile host can also send Agent Solicitation messages to force any agents on the same link as the mobile host to immediately transmit an Agent Advertisement.

Agent Advertisements and Agent Solicitations are extensions to the Router Advertisements and Router Solicitations messages as defined in IEFT RFC 1256, "ICMP Router Discovery Messages," S. Deering (ed.), September 1991. ICMP Router Advertisement messages contain a list of router addresses and their preference values that any host at the same link can use as a default router. ICMP Router Advertisement messages are periodically broadcast. However, a host can solicit for ICMP Router Advertisement by sending a Router Solicitation message. Agent Solicitation messages look exactly the same as Router Solicitation messages except that the Time-to-Live filed is set to one. Agent Advertisement messages are longer than Router Advertisement messages because of the presence of Mobility Agent Advertisement extension. A host can use the IP total length field, the number of addresses and address entry size fields to determine if the received ICMP message is a Router Advertisement or an Agent Advertisement.

There are two methods by which mobile hosts can determine that they have moved. The first method is using the lifetime field within the ICMP Router Advertisement portion of an Agent Advertisement. If a mobile host is registered with a foreign agent, and fails to hear an advertisement from that agent within the specified lifetime, then the mobile host can assume that it has moved. The second method for move detection uses network-prefixes. The mobile host compares the network prefix of the newly heard advertisement with that of the foreign agent with which it has registered. If they differ, the mobile host concludes that it has moved.

For mobile hosts that use collocated care-of addresses, the mobile hosts can put their network-interface drivers into promiscuous mode. In this mode, a mobile host examines all packets on the link. If none of the packets flying across the link have network-prefixes that equal the mobile host's current collocated care-of address, then the mobile host may infer that it has moved and should acquire a new care-of address.

### Mobile Registration

Mobile IP registration consists of an exchange of Registration Request and Reply messages. A registration message is carried within the data portion of a UDP packet. In Mobile IP, a registration is initiated by the mobile host. A registration is used by a mobile host for:
- requesting data forwarding services from a foreign agent
- informing its home agent of its current location
- renewing a registration which is due to expire
- de-registering the mobile host when it returns to its home link.

A mobile host can register directly to the home agent or via the foreign agent. A Registration Request message is sent by a mobile host to begin the registration process. If the registration is via the foreign agent, the foreign agent examines the message and relays it to the home agent.

The home agent and mobile host authenticates one another via the mandatory Authenticator field within the Mobile-Home Authentication Extension which is part of the Registration messages. The Mobile-Foreign Authentication Extension is an optional feature in IEFT RFC2002, "IP Mobility Support," C. Perkins (ed.), October 1996.

If the home agent accepts the Registration Request, it will update the mobile host's binding entry according to the specified care-of address, mobile host's home address, and the registration lifetimes. Then, the home agent sends a Registration Reply to inform the mobile host whether or not the attempted registration is successful. If the registration is done via the foreign agent, the foreign agent updates its list of known visiting mobile hosts and relays the Registration Reply to the mobile host. If a mobile host does not receive a Registration Reply within a reasonable period of time, then the mobile retransmits the Registration Request a number of times.

### Data Forwarding to Mobile Host

Referring now to FIG. 1C, a block diagram of a Mobile IP network for illustrating data forwarding is shown. The home agent 4 intercepts packets destined to the home address of a registered mobile host 2 by advertising reachability to the mobile host's home address. Alternatively, the home agent can use gratuitous and proxy ARP. When a home agent receives a Registration Request message from a mobile host, it uses gratuitous ARP (unsolicited ARP reply) to inform hosts in the same home link that the current mapping in their ARP cache needs to be modified to reflect the mobile host's new link-layer address to be that of the home agent. After the mobile host's successful registration, the home agent is supposed to reply to any ARP request on behalf of the mobile host. Such an ARP reply is called a proxy ARP.

All home agents 4 and foreign agents 6 are required to implement IP-in-IP Encapsulation (e.g., as described in "IP Encapsulation Within IP," C. Perkins, October 1996) for tunneling purposes. In addition, they may implement Minimal Encapsulation (e.g., as described in "Minimal Encapsulation Within IP," C. Perkins, October 1996) and Generic Routing Encapsulation (e.g., as described in "Generic Routing Encapsulation (GRE)," S. Hanks, R. Li, D. Farinacci, P. Traina).

When the home agent receives a packet destined to one of its mobile hosts, it looks up the corresponding bindings. The home agent then tunnels the packet to the care-of address. The encapsulated inner packet is from the corresponding host 8 to the mobile host's home address. In the case of the foreign care-of address, when the foreign agent receives the tunneled packet, it removes the outer packet to recover the original inner packet. It sees that the destination address is that of a registered mobile host, looks up the appropriate interface, and sends the packet to the mobile host. In the case of collocated care-of address, the mobile host performs similar processing upon receiving the tunneled packet.

### Data Forwarding From Mobile Host

If a mobile host registers via a foreign agent, the mobile host can either select the foreign agent as its router or any router whose address appears in the Router Address fields within the ICMP Router Advertisement portion of any node's Agent Advertisements or Router Advertisements.

A mobile host that registers a collocated care-of address on a foreign link can use any of the addresses listed in the Router Address fields of the ICMP Router Advertisements if the mobile host can hear any Router Advertisements. Otherwise, it can rely on the same mechanism by which it acquires its collocated care-of address to provide the address of a suitable router.

### II. Cellular Digital Packet Data

The Cellular Digital Packet Data system was designed as an overlay data network to existing 800 MHz cellular Advanced Mobile Phone System (AMPS) Networks. Typical maximum network layer throughputs are on the order of 12 kbps per mobile, which serves as an airlink well-suited for the bursty traffic generated by light-weight client-server applications.

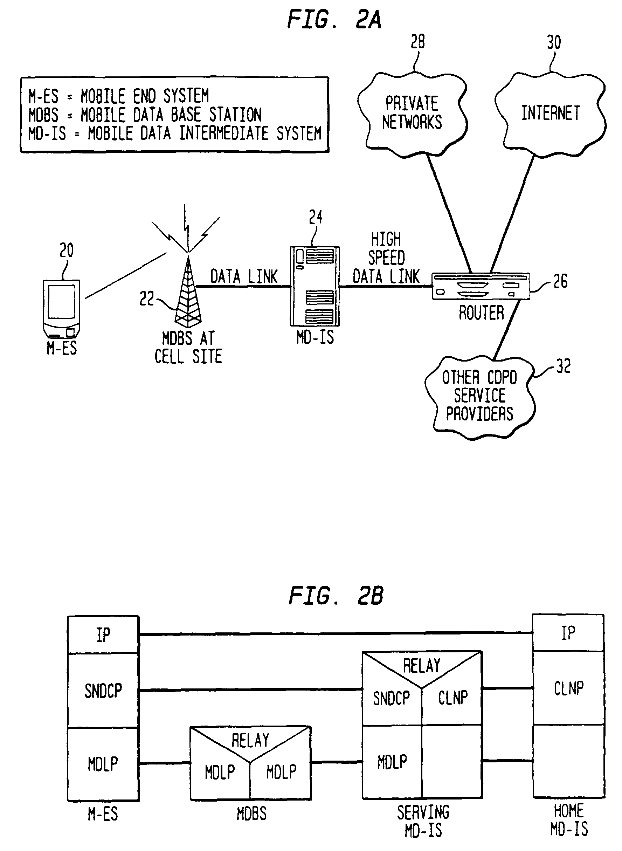

Referring to FIG. 2A, a block diagram of a CDPD network is shown. At a high level, CDPD's network architecture bears a strong resemblance to 800-MHz analog cellular Advanced Mobile Phone networks CDPD networks. To keep network deployment and operations costs low, CDPD's network side RF transmitters and receivers were designed to reuse much of an existing cellular voice network's infrastructure: antennae towers, RF amplifiers, cell site enclosures, and cell site - Mobile Telephone Switching Office trunks. The overlay architecture allows existing cellular service providers to leverage their sizable investment in voice infrastructure.

The CDPD network is constructed from the following building blocks:
- CDPD's subscriber device, the Mobile-End Systems (M-ESs) 20: RF subsystem circuitry in the M-ES perform CDPD's Gaussian Modulated Shift Keying modulation over AMPS channels. Additional M-ES hardware and software run the CDPD protocol stack and user interface.
- CDPD's network side RF termination, the Mobile Data Base Stations (MDBSs) 22: The MDBS is responsible for CDPD radio resource management, termination of the reverse (M-ES→network) link Medium Access Control protocol, and relaying link layer frames to and from M-ESs. The MDBS is also responsible for the periodic broadcasting of CDPD-specific system information messages which inform M-ESs of network timers, protocol parameters, and system configuration information.
- CDPD's mobility-aware network layer router, the Mobile Data-Intermediate Systems (MD-ISs) 24: The Mobile Data-Intermediate System masks M-ES mobility from mobility-unaware applications. The MD-IS delivers network layer packets to M-ESs, collects data used for usage accounting, mobility management.
- Network Routers 26: The network router 26 is coupled to the MD-IS via a high speed data link in order to provide communications paths between the MD-IS and private networks 28, the Internet 30, and other CDPD service providers 32.

CDPD networks also require a number of network support services - usage accounting, M-ES authentication, network management. For service interoperability, the CDPD specification, CDPD System Specification, Release 1.0, July 19, 1993, spells out standard interfaces for these support services.

CDPD's protocol stack is shown in FIG. 2B. Key feature of the protocol stack are:
- Network Layer - CDPD provides native support of IP and CLNP. Mobiles are assigned a fixed network layer address by CDPD service providers. To date, all M-ESs use IP. CLNP networks are used by MD-ISs for the exchange of control messages, forwarding of packets to roaming Mobiles, dissemination of raw accounting data and network management.
- Subnetwork Dependent Convergence Protocol (SNDCP) - The CDPD protocol stack was designed to make efficient use of airlink bandwidth. Compression of TCP/IP uses Van Jacobsen header compression. Header compression is also defined for CLNP headers. Optional V.42bis compression is supported to compress payloads of SNDCP packets.
- Link Layer - CDPD's Mobile Data Link Protocol (MDLP) is similar to HDLC. Selective rejects are defined for efficient retransmission.

### CDPD Cell Selection

Before a M-ES can register, it searches for an AMPS channel carrying a CDPD channel stream that is strong enough to lock on. Digital signatures sent over the forward link are used by the M-ES to determine that an AMPS channel has a CDPD channel stream on it. After locking on to a CDPD channel stream, the M-ES measures the block error rate of the forward channel. If the M-ES finds the measured block error rate acceptable, the M-ES listens to the forward channel for a CDPD channel Identification Message, a CDPD system overhead message containing the logical address of the CDPD channel stream and other configuration information.

### Mobile Registration

Before a M-ES can gain access to the CDPD Network, the M-ES must register. By registering, a M-ES informs the CDPD network of the current CDPD channel that the M-ES is listening to, thereby allowing the CDPD network to forward any packets bound for the M-ES to the correct cell and CDPD channel. In addition, registration serves as a first line of defense against fraudulent network usage. During registration, a M-ES sends encrypted messages to the CDPD network containing shared secrets the network uses to authenticate the user. M-ESs presenting invalid credentials will be denied access to the CDPD network.

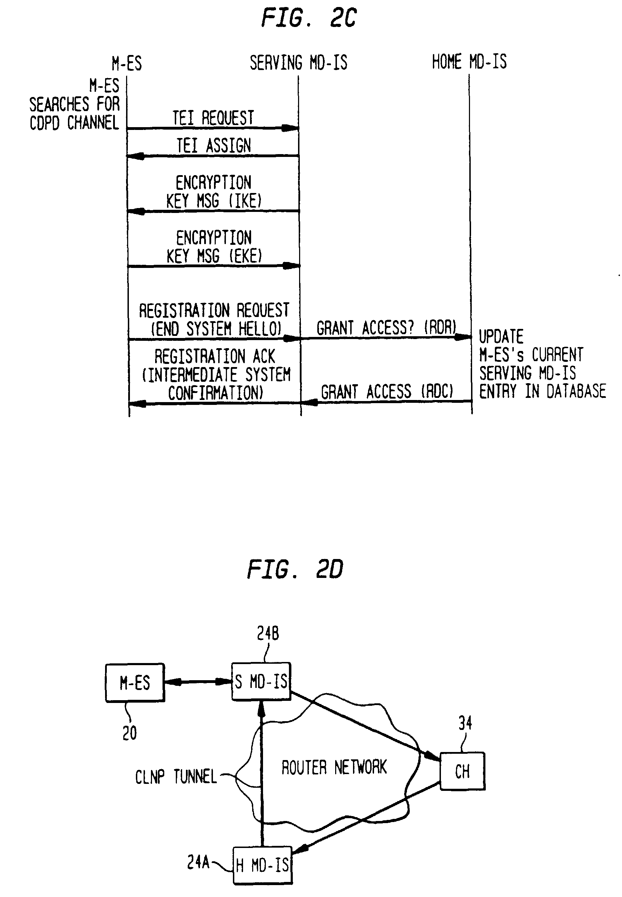

During registration, a number of messages are transferred between the M-ES, the home and serving MD-ISs, and other CDPD network element. FIG. 2C shows a message flow diagram for a typical successful M-ES registration attempt.

After receiving a Channel Identification message, the M-ES sends a request for a Terminal Endpoint Identifier (TEI), a link layer address that will be used to identify link layer frames sent to and from the MD-IS. The TEI request message is received by the MDBS and forwarded to the Serving MD-IS. The serving MDIS generates a TEI for the M-ES, and sends the value to the M-ES. The MD-IS begins the Diffie-Hellman key exchange by sending an Intermediate System Key Exchange (IKE) message to the M-ES. The M-ES then responds with an End System Key Exchange (EKE) message. After this point, all communication between the Serving MD-IS and the M-ES is encrypted. To request access to the CDPD network, the M-ES sends an End System Hello message containing the M-ES's IP or CLNP address and its credentials. The Serving MD-IS forwards the credentials to the M-ES home MD-IS via a CLNP network (if the M-ES is roaming). The Home MD-IS compares the M-ES's credentials with those stored in a database, and responds to the Serving MD-IS whether access should be granted. The serving MD-IS sends an Intermediate System Confirm (ISC) message to the M-ES indicating whether the M-ES may begin transmitting and receiving data over the CDPD network.

### Data Transfer

Referring to FIG. 2D, a block diagram of a CDPD network illustrating network data flow is shown. CDPD uses triangular routing to send forward IP packets to roaming M-ESs 20. Each M-ESs IP address maps to a home MD-IS 24A. The home MD-IS keeps track of the serving MD-ISs 24B of all its homed M-ESs. Packets sent to M-ESs using a serving MD-IS that is not their home are routed to the M-ES's home MD-IS. The home MD-IS then forwards the traffic to the serving MD-IS over CLNP tunnels. This way of forwarding traffic means that all MD-ISs in a CDPD network need to know the CLNP addresses of the home MD-ISs for all mobiles they offer service to. Carriers with roaming agreements share this information. The IP-CLNP mapping is maintained manually. Reverse IP packets sent by roaming M-ESs follow the normal IP/CLNP routing.

Overhead messages sent over the forward link of each CDPD channel give the channel identity as well as the identity of the cellular service provider. Additional overhead messages inform the M-ESs of where to find CDPD channels on neighboring cells to assist in handoffs.

### III. General Packet Radio Service

General Packet Radio Service (GPRS) is the packet data service developed by the European Telecommunications Standards Institute (ETSI) for the Global System for Mobile Communications (GSM). The GSM/GPRS standard is found in GSM 03.60: Digital Cellular Telecommunications System (Phase 2+); General Packet Radio Service (GPRS); Service Descriptions, stage 2, Version 5.3.0, 1998.

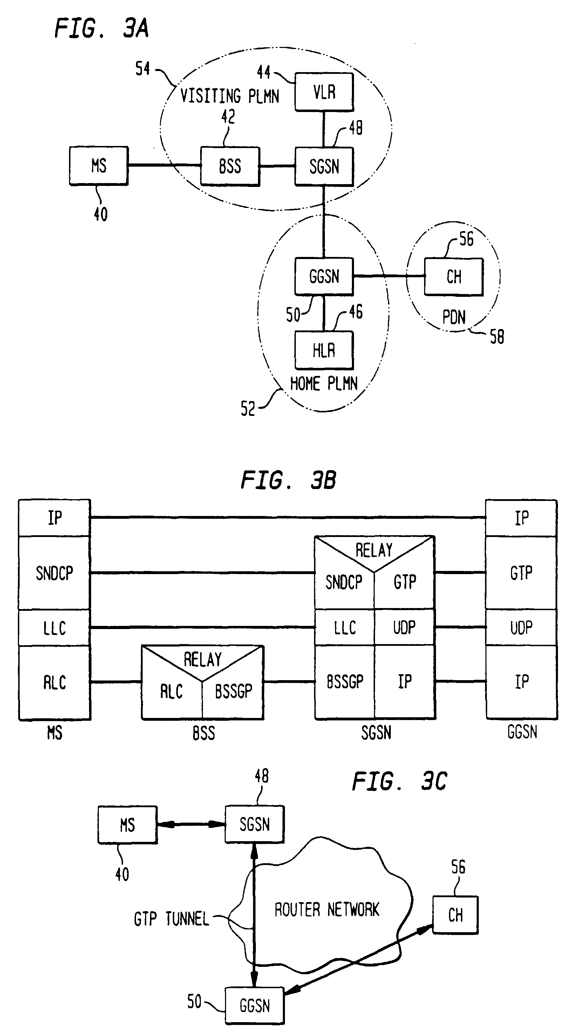

Referring to FIG. 3A, a block diagram of a GPRS network architecture is shown. In the GPRS architecture, there are four logical elements: mobile stations (MS) 40, base station subsystems (BSS) 42, location register: visiting location register (VLR) 44 and home location register (HLR) 46, and GPRS support nodes: serving GPRS support node (SGSN) 48 and gateway GPRS support node (GGSN) 50. FIG. 3A illustrates the case of an MS roaming away from its home public land mobile network (PLMN) 52 into a visiting PLMN 54. The GSN connected to the MS is called the serving GSN (SGSN) 48 which has access to the visiting location register (VLR) 44 located in a mobile switching center or MSC (not shown). However, the MS is registered at the home location register (HLR) 46 which can be accessed by the gateway GSN (GGSN) 50. A corresponding host (CH) 56 in a packet data network (PDN) 58 sends the IP packet to the MS through the GGSN first.

Referring to FIG. 3B, a GPRS protocol stack is shown. The packet data network (PDN) is an IP network providing connectivity from the corresponding host (CH) to the gateway GSN (GGSN). Between GGSN and the serving GSN (SGSN), IP packets are transported via the GRPS tunneling protocol (GTP), GSM 09.60: Digital Cellular Telecommunications System (Phase 2+); General Packet Radio Service (GPRS); GPRS Tunneling Protocol (GTP) Across the Gn and Gp Interface, which is used for both data and signaling. The network connecting the GSNs within a PLMN and between PLMNs is a private IP network. In the case of IP packets encapsulated by GTP, UDP (User Datagram Protocol) is used to carry the GTP PDUs (Protocol Data Units). At the SGSN, the original IP packet is recovered and encapsulated again according to the subnetwork dependent convergence protocol (SNDP) for transporting to the MS. The logical link control (LLC) between the SGSN and the MS provides a highly reliable connection. The base station system GPRS protocol (BSSGP) is used to convey the routing and Quality of Service-related information between the SGSN and the BSS. In the BSS, the LLC PDUs are recovered and sent to the MS using the radio link control (RLC) function.

### GPRS Cell Selection

In a GPRS network, the cells are organized into routing areas (RA), which are in turn grouped into location areas (LA). When an MS wishes to use the GRPS service, it first performs the GPRS Routing Area and GPRS cell selections. These selections are done autonomously by the MS using procedures similar to GSM phone subscribers. The procedures include the measurement and evaluation of signal quality from nearby cells, and the detection and avoidance of congestion within candidate cells. The base station system (BSS) can also instruct the MS to select a certain cell.

### Mobile Registration

The mobile registration in GPRS can be divided into two procedures: attach and activation.

### Attach Procedure

When an MS is roaming in a visiting PLMN, it first needs to attach itself to a SGSN. The MS initiates the attach procedure by sending to the SGSN its International Mobile Subscriber Identity (IMSI) which is unique to each GPRS/GSM subscriber. Based on the IMSI, the SGSN informs the HLR in the home PLMN about the IP address of the SGSN, and the VLR in the visiting PLMN about the location area of the MS. The HLR transmits the subscriber data to both the SGSN and the VLR. After the databases in the SGSN, HLR and VLR have been updated, the attach procedure is complete.

### Activation Procedure

After the MS has been attached to the SGSN, it can negotiate the packet data protocol (PDP) which is used. The MS sends to the SGSN the MS's IP address, if one exists, otherwise, an IP address will be assigned by the home or visiting PLMN. Based on the information in the subscriber data, the SGSN determines the GGSN address in the home PLMN. Then the SGSN sends a message to the GGSN with the IP address of the MS and the GTP tunnel identifier (TID). The GGSN creates a new entry in its PDP context table which allows the GGSN to route IP packets between the SGSN and the external IP network. The entry is similar to binding information for Mobile-IP. Now the SGSN is able to route IP packets between the GGSN and the MS.

### Data Transfer

Referring to FIG. 3C, a block diagram illustrating GPRS data transfer is shown. After the MS has been attached to the GPRS and the PDP Context Activation procedure has been completed, the GPRS network transparently transports IP packets between external packet data networks and the MS. When a corresponding host (CH) has a packet to be sent to the MS, it will send an ARP request (IP address of the MS) to which the GGSN will respond. When the IP packet is routed to the GGSN, the IP packet is encapsulated with a GPRS Tunnel Protocol (GTP) header. The GTP PDU is inserted into an UDP PDU which is again inserted in an IP PDU. The IP header contains the address of the SGSN. At the SGSN, the original IP packet is recovered and re-encapsulated for transmission to the MS.

For packets sent by the MS to the CH, a reverse tunnel is used. In this case, the SGSN does the encapsulation using GTP and transmits the GTP PDU to the GGSN. At the GGSN, the original IP packet is recovered and sent to the CH via regular IP routing.

While it is known that Mobile IP implements certain route optimization techniques, CDPD and GPRS networks do not do the same. Accordingly, it would be highly advantageous to implement route optimization techniques in CDPD and GPRS networks.

### Summary of the Invention

The present invention provides methods and apparatus for providing route optimization in GPRS and CDPD networks. In one aspect of the invention, a route optimization technique in a GPRS network includes establishing a gateway GPRS support node in a visiting public land mobile network in which a roaming mobile station is currently located. Specifically, a tunnel is formed between the gateway GPRS support node and a serving GPRS support node to which the mobile station is in direct communication over a radio link. In this manner, external corresponding hosts may route packets to the gateway GPRS support node, rather than the GPRS support node in the mobile station's home public mobile network, as is done in conventional GPRS networks. Advantageously, a shorter path is established for transfer of packets between a mobile station and a corresponding host.

In another aspect of the invention, a route optimization technique in a CDPD network is provided. In the case of the CDPD network, a home mobile data-intermediate system node (local HMD-IS) in the foreign (visiting) network serves as a gateway node to the roaming mobile-end system. Specifically, a tunnel is formed between the local HMD-IS and a serving MD-IS in the foreign network to which the mobile-end system is in direct communication over a radio link. In this manner, external corresponding hosts may route packets to the local HMD-IS, rather than the HMD-IS in the mobile station's home network, as is done in conventional CDPD networks. Advantageously, a shorter path is established for transfer of packets between a mobile-end system and a corresponding host.

In yet another aspect of the invention, such gateway nodes in GPRS and CDPD networks may be used as anchoring points in the visiting networks when handoff procedures are performed with respect to mobile nodes.

These and other objects, features and advantages of the present invention will become apparent from the following detailed description of illustrative embodiments thereof, which is to be read in connection with the accompanying drawings.

### Brief Description of the Drawings

FIG. 1A is a block diagram of a Mobile IP network architecture;
FIG. 1B is a diagram of a Mobile IP protocol stack;
FIG. 1C is a block diagram illustrating data flow in a Mobile IP network;
FIG. 2A is a block diagram of a CDPD network architecture;
FIG. 2B is a diagram of a CDPD protocol stack;
FIG. 2C is a flow diagram illustrating mobile registration in a CDPD network;
FIG. 2D is a block diagram illustrating data flow in a CDPD network;
FIG. 3A is a block diagram of a GPRS network architecture;
FIG. 3B is a diagram of a GPRS protocol stack;
FIG. 3C is a block diagram illustrating data flow in a GPRS network;
FIG. 4 is a block diagram of a hardware architecture of a network element;
FIG. 5 is a block diagram illustrating route optimization in a Mobile IP network;
FIG. 6A is a block diagram illustrating route optimization in a GPRS network according to the invention;
FIG. 6B is a flow diagram illustrating a conventional signaling method for establishing a route in a GPRS network;
FIG. 6C is a flow diagram illustrating an embodiment of a signaling method for establishing an optimized route in a GPRS network according to the invention;
FIG. 6D is a flow diagram illustrating packet routing in a conventional GPRS network;
FIG. 6E is a flow diagram illustrating packet routing in a GPRS network implementing route optimization according to the invention;
FIG. 7A is a block diagram illustrating route optimization in a CDPD network according to the invention;
FIG. 7B is a flow diagram illustrating a conventional signaling method for establishing a route in a CDPD network;
FIG. 7C is a flow diagram illustrating an embodiment of a signaling method for establishing an optimized route in a CDPD network according to the invention;
FIG. 7D is a flow diagram illustrating packet routing in a conventional CDPD network;
FIG. 7E is a flow diagram illustrating packet routing in a CDPD network implementing route optimization according to the invention;
FIG. 8A is a block diagram illustrating handoff in a network implementing route optimization according to the invention; and
FIG 8B is a flow diagram illustrating handoff signaling in a GPRS network according to the invention.

### Detailed Description of Preferred Embodiments

The present invention is described below in the context of GPRS and CDPD networks, particularly, with respect to route optimization. However, it is to be appreciated that the teachings of the invention discussed herein are not so limited. That is, the route optimization methodologies and apparatus of the invention described herein may be implemented in other packet-based communications systems similar to GPRS and CDPD networks. In addition, it is to be understood that methodologies described herein for use in a mobile or fixed node (e.g., mobile host, mobile station, mobile end system, corresponding host, etc.) or network access node (e.g., home agent, foreign agent, SGSN, GGSN, HMDIS, SMDIS, etc.) are executed by one or more processors respectively associated therewith. The term "processor" as used herein is intended to include any processing device, including a CPU (central processing unit), or microprocessor, and associated memory. The term "memory" as used herein is intended to include memory associated with a processor or CPU, such as RAM, ROM, a fixed memory device (e.g., hard drive), or a removable memory device (e.g., diskette). In addition, the processing unit may include one or more input devices, e.g., keypad or keyboard, for inputting data to the processing unit, as well as one or more output devices, e.g., CRT display, for providing results associated with the processing unit. Accordingly, software instructions or code associated with implementing the methodologies of the present invention may be stored in associated memory and, when ready to be utilized, retrieved and executed by an appropriate CPU.

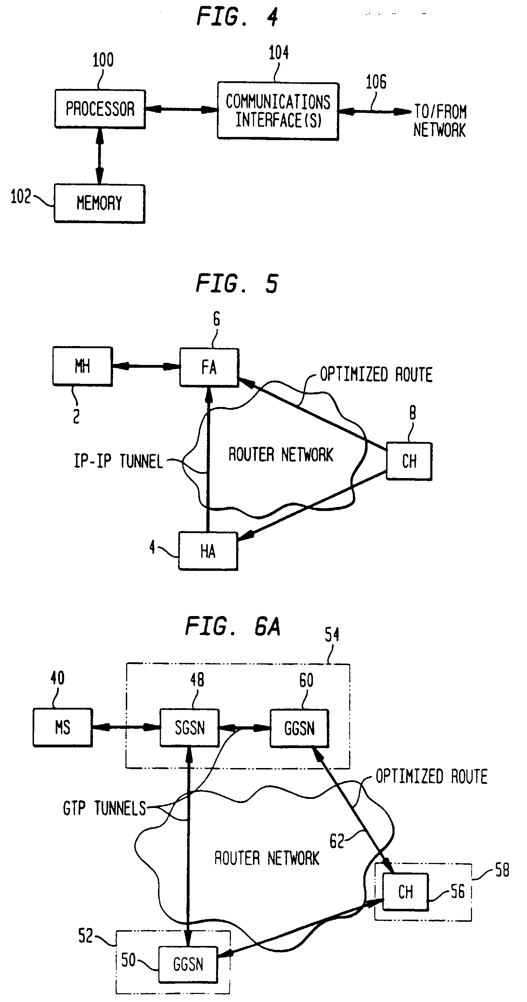

Referring to FIG. 4, a block diagram of an exemplary hardware architecture of network elements such as a mobile or fixed node (e.g., mobile host (MH), mobile station (MS), mobile-end system (M-ES), and corresponding host (CH)) or network access node (e.g., home agent (HA), foreign agent (FA), SGSN, GGSN, HMDIS, and SMDIS), for use according to the present invention, is shown. Each network element includes a processor 100 for controlling operations associated therewith, in cooperation with its associated memory 102, including the methodologies of the invention to be described in detail below. Each network element also includes one or more communications interfaces 104 (e.g., modem) for communicating with other network elements over communications link 106. It is to be appreciated that the communications interface(s) 104 and link(s) 106 are specific to the type of network element in which the interface is located, as well as the type of other network element with which it communicates.

Some basic features of mobility management in Mobile-IP, CDPD and GPRS have been previously explained and/or mentioned, e.g., beacons, registration, and data transfer. For example, all three protocols use some form of beaconing messages. CDPD and GPRS uses airlink beaconing messages while Mobile IP uses network layer beaconing messages. CDPD and GPRS users detect their movement based on changes in cell identifies, routing/location area while Mobile-IP users detect their movement based on network prefixes specified in the network-layer beaconing messages. Further, both CDPD and GPRS utilize a combination of link-layer and network layer messages to complete a new registration while Mobile-IP uses only network layer messages. In all three cases, registrations are refreshed upon the expiry of some timers. The timers for CDPD and GPRS may be longer than that for Mobile-IP. Still further, all three mobility management approaches use triangular routing to forward packets from the corresponding host to the mobile host. All packets are routed through the home node to the serving node using different forms of tunneling (e.g., IP-in-IP, CLNP, GTP). For the packets sent by the mobile host, the GPRS mobility management procedure uses reverse tunneling to send the packets to the GGSN. In CDPD and Mobile-IP, however, the packets from the mobile host are routed using normal routing procedure without going through the home MDIS or home agent.

As previously discussed and illustrated, Mobile IP, GPRS and CDPD use triangular routing to route packets from the corresponding hosts to the mobile nodes. Since there are usually shorter paths between the corresponding host and the serving network, requiring the packets to be forwarded by the home network results in inefficient usage of network resources.

The route optimization technique proposed in the IETF Mobile IP protocol is an attempt to eliminate the triangular routing. Referring to FIG. 5, such a route optimization technique is shown. The triangular routing for packets sent from a corresponding host 8 to a mobile host 2 via the home agent 4 is eliminated. The mobile host and the home agent are given the responsibility to inform the corresponding host of the mobile's node latest location. Either the mobile host or the home agent can send a Binding Update message to the corresponding host to inform the corresponding host of the current care-of address of the mobile host. Foreign agent 6 that receives packets destined for the mobile host will send a Binding Warning message to the home agent. That way, the home agent can send Binding Update messages to the corresponding hosts. However, such a technique forces software changes to corresponding hosts, which are not mobile hosts, as well as to the mobility agents (i.e. both the home and foreign agents). Further, this approach requires all corresponding hosts to support Mobile IP. It also requires security association between the corresponding host and the home agent or between the corresponding host and the mobile host. As will be evident with respect to the route optimization approaches of the invention to be described below, the invention allows existing hosts that do not support Mobile IP to have shorter routes when communicating with the mobile host.

Referring now to FIG. 6A, a block diagram of a GPRS network implementing route optimization according to the invention is shown. It is to be appreciated that there is no route optimization implemented in current GPRS networks. Accordingly, the present invention defines a new network entity: gateway IWF (IWF.G) through which, for example, an external network may communicate with a mobile host. For GPRS, the gateway IWF is a GGSN (GGSN.V) 60 in the visiting PLMN 54. As will be explained below, a route 62 is advantageously established between a CH 56 and the GGSN 60. Advantageously, route inefficiencies that exist in conventional GPRS networks between MSs and CHs are eliminated in that packets are no longer required to be routed through the GGSN of the MS's home PLMN. Rather, packets may be routed through a GGSN in the visiting PLMN. In this way, a path between the MS, to the visiting SGSN, to the visiting GGSN, to the CH is significantly more efficient than the conventional path requiring routing to another PLMN (i.e., the MS's home PLMN). It is to be understood that according to the GSM/GPRS standard, only a GGSN is accessible by external hosts.

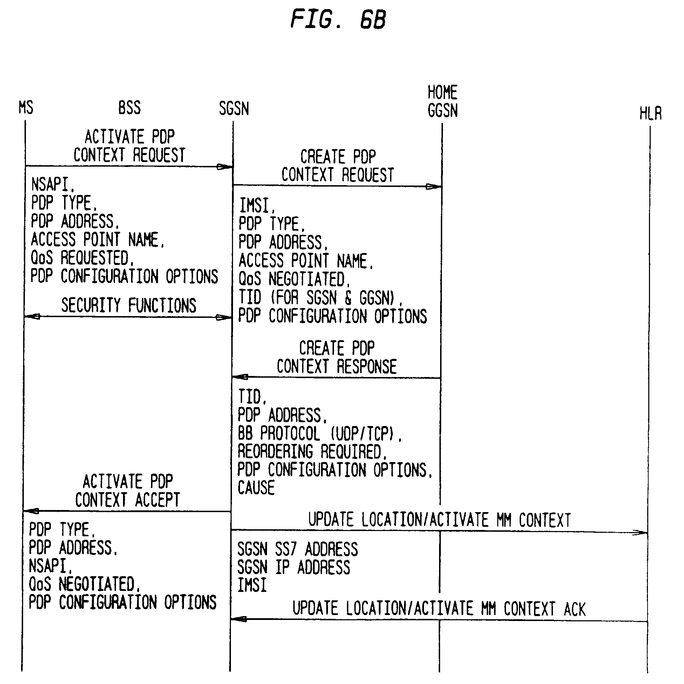

FIG. 6B illustrates relevant portions of the signaling involved in the attach and activation procedures involved in conventional GPRS mobile registration. Recall that when an MS is roaming in a visiting PLMN, it first needs to attach itself to a SGSN. The MS initiates the attach procedure by sending to the SGSN its International Mobile Subscriber Identity (IMSI) which is unique to each GPRS/GSM subscriber (not shown). Based on the IMSI, the SGSN informs the HLR in the home PLMN about the IP address of the SGSN, and the VLR in the visiting PLMN about the location area of the MS. This is accomplished via the Update Location/Activate MM Context message. As is known, this message contains the SGSN SS7 address, the SGSN IP address, and the IMSI of the MS. The HLR transmits the subscriber data to both the SGSN and the VLR via the Update Location/Activate MM Context Acknowledgement message. Note that signaling between the SGSN/HLR and the VLR is not shown in FIG. 6B for the sake of simplicity.

After the databases in the SGSN, HLR and VLR have been updated, the attach procedure is complete. After the MS has been attached to the SGSN, it can negotiate packet data protocol (PDP) activation. As is known, the MS sends to the SGSN an Activate PDP Context Request message containing the following information: NSAPI (Network Layer Service Access Point Identifier); PDP Type (e.g., X.25 or IP); PDP Address (e.g., an X.121 address); APN (Access Point Name requested by the MS); QoS (the Quality of Service profile requested for this PDP context); and PDP Configuration Options. Based on the information in the subscriber data, the SGSN determines the GGSN address in the home PLMN. Then the SGSN sends a Create PDP Context Request message to the home PLMN GGSN. This message contains the following information: IMSI; PDP Type; PDP Address; APN; QoS Negotiated; TID (Tunnel Identifier associated with the tunnel to be set up between the SGSN and the home GGSN); and PDP Configuration Options. Accordingly, this information includes, *inter alia,* the IP address of the MS and the GTP tunnel identifier (TID). The GGSN creates a new entry in its PDP context table which allows the GGSN to route IP packets (PDP protocol data units or PDUs) between the SGSN and the external IP network (e.g., corresponding hosts). The home GGSN sends a Create PDP Context Response message including: TID; PDP Address; BB Protocol (indicates whether TCP or UDP shall be used to transport data between the SGSN and the GGSN); Reordering Required (indicates whether the SGSN shall reorder N-PDUs before delivering them to the MS); PDP Configuration Options; and Cause. The SGSN returns an Activate PDP Context Accept message containing: PDP Type; PDP Address; NSAPI; QoS negotiated; and PDP Configuration Options, to the MS. Now the SGSN is able to route IP packets (PDP PDUs) between the GGSN and the MS. Note that Security Functions (e.g., authentication) may be performed between the MS and the SGSN.

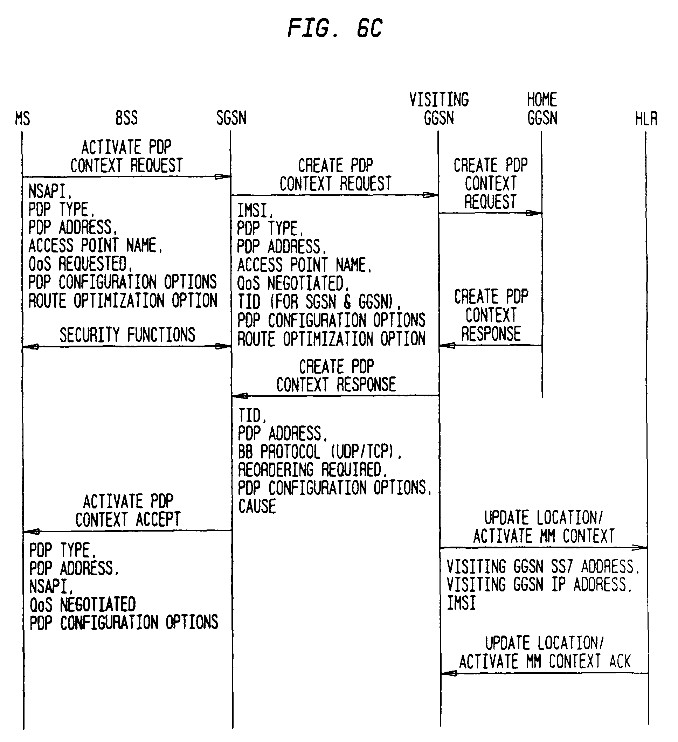

Referring now to FIG. 6C, a signaling method for establishing an optimized route in a GPRS network according to the invention is shown. Advantageously, rather than the SGSN, to which the MS has attached, negotiating PDP Context messages directly with the GGSN 50 in the home PLMN, it negotiates PDP Context with a GGSN within its own PLMN, i.e., GGSN 60. The GGSN 60 negotiates PDP context with the home GGSN 50. It is to be appreciated that all GGSNs support one of the three IETF tunneling protocols e.g. IP-in-IP encapsulation, as well as the GTP. We also assume that the home GGSN can determine the visiting GGSN's IP address based on the SGSN's address. Once the home GGSN accepts the PDP context activation, the home GGSN can send a Binding Update message containing the visiting GGSN's information to the corresponding host (CH). The CH can then send packets directly to the visiting GGSN. The visiting GGSN sets up a GTP tunnel (or, for example, IP-in-IP tunnel) with the SGSN when it receives packets destined for the MS from the CH.

In order to establish a GTP (or, e.g., IP-in-IP tunnel) tunnel between the SGSN 48 and the GGSN 60, the conventional signaling messages are modified as shown in FIG. 6C. Specifically, during the attachment procedure, the SGSN passes the Update Location/Activate MM Context message to the visiting GGSN. The visiting GGSN then informs the HLR in the home PLMN 52 of its SS7 Address, its IP Address, and the IMSI of the MS. This is done in the Update Location/Activate MM Context message. The HLR responds with the Update Location/Activate MM Context Acknowledgement message. Then, in the activation procedure, a Route Optimization Option field is added to the Activate PDP Context Request message and to the Create PDP Context Request message. Advantageously, when the visiting GGSN receives the modified Create PDP Context Request message, it creates a new entry in its PDP context table which allows the visiting GGSN to route IP packets between the SGSN and the external IP network (e.g., corresponding hosts). That is, based on the information received, the visiting GGSN maps the TID and the IP address of the SGSN to the PDP Address assigned to the MS. This is so that when the visiting GGSN receives a packet with the TID from the SGSN, the visiting GGSN de-encapsulates the packet and routes the data to the external PDN (e.g., CH 56). On the other hand, if the visiting GGSN receives a packet with the PDP address of the MS from the external PDN, the visiting GGSN encapsulates the packet after finding the TID and SGSN IP address that is mapped to that PDP address. Also, it is to be understood that the visiting GGSN sends the modified Create PDP Context Request message to the home GGSN 50, which responds with the Create PDP Context response.

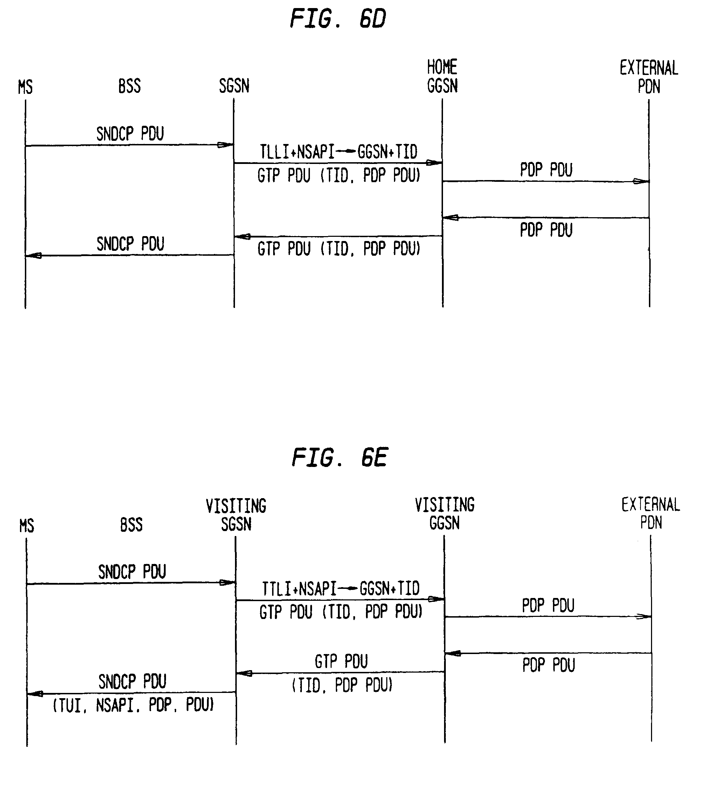

Referring now to FIGs. 6D and 6E, flow diagrams contrasting packet routing in the conventional GPRS network and optimized packet routing in a GPRS network according to the invention are shown. As shown, in the conventional arrangement, SNDCP (Subnetwork Dependent Convergence Protocol) PDUs packets are routed between the MS 40 and the SGSN 48, the home GGSN maps the TTLI (Temporary Logical Link Identifier) and the NSAPI (Network Service Access Point Identifier) to the IP address of the home GGSN and TID such that GTP PDUs, containing TID and PDP PDUs, may be routed to the home GGSN from the SGSN, and back in the other direction. Then, PDP PDUs are routed between the home GGSN and the external PDN.

However, in accordance with the invention as shown in FIG. 6E, after the optimized route 62 is established between visiting GGSN 60 and the CH 56 in the external PDN 58 and the external PDN has received the Binding Update message from the GGSN 50, the CH and MS may transmit packets back and forth using the optimized route. That is, SNDCP PDUs packets are routed between the MS 40 and the SGSN 48, GTP encapsulated packets are routed between the SGSN 48 and the visiting GGSN 60, and PDP packets are routed between the visiting GGSN 60 and the CH 56.

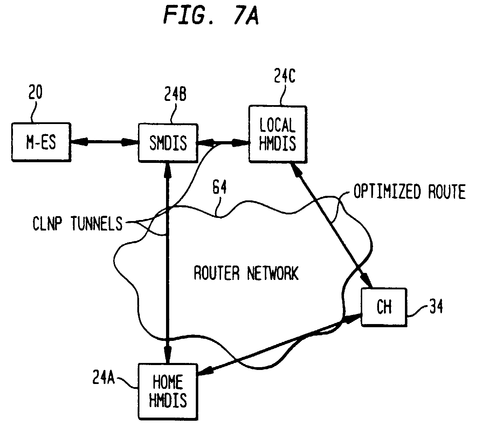

Similarly, for CDPD system, if we assume that Home MDIS supports Binding Update messages and Serving MDIS (or its router) understands one of the 3 IETF tunneling protocols, then the same approach as discussed above with respect to GPRS can be used. Referring now to FIG. 7A, a block diagram of a CDPD network implementing route optimization according to the invention is shown. It is to be appreciated that there is no route optimization implemented in current CDPD networks. Accordingly, the present invention defines a new network entity: gateway IWF (IWF.G) through which a service provider connects to the public internet. For CDPD, the gateway IWF is a Home MD-IS in the foreign network (local HMD-IS) in which the M-ES has become temporarily associated, i.e., HMD-IS 24C. As will be explained below, a route 64 is advantageously established between a CH 34 and the HMD-IS 24C. Advantageously, route inefficiencies that exist in conventional CDPD networks between M-ESs and CHs are eliminated in that packets are no longer only required to be routed through the HMD-IS 24A in the home network of the MS. Rather, packets may also be routed through a HMD-IS in the visiting or foreign network. In this way, a path between the M-ES, to the SMD-IS, to the visiting HMD-IS, to the CH is significantly more efficient than the conventional path requiring routing to another network (i.e., the MS's home network).

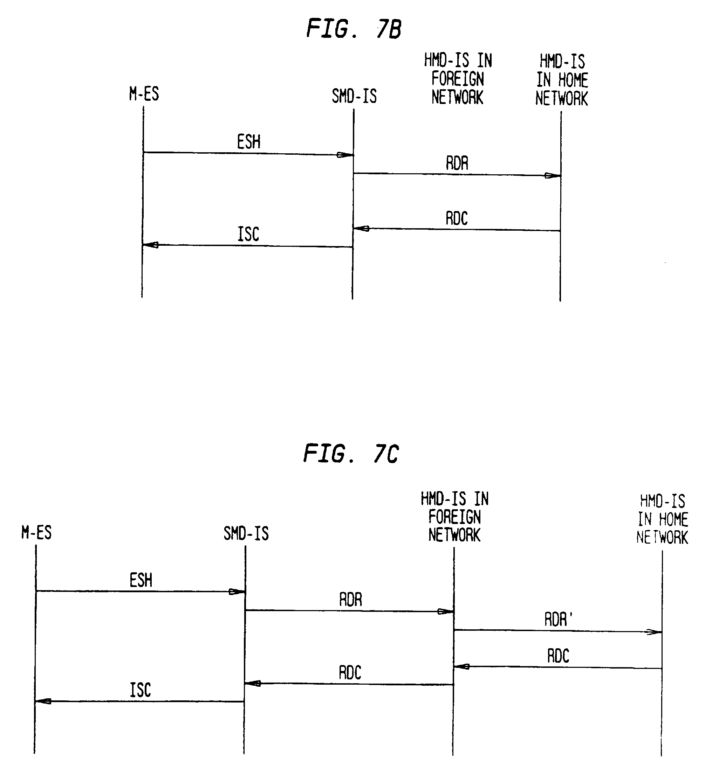

Referring to FIG. 7B, conventional mobile registration signaling in CDPD is shown. After the authentication and encryption procedures are complete between the M-ES and the SMD-IS, to request access to the CDPD network, the M-ES sends an End System Hello (ESH) message containing the M-ES's IP or CLNP address and its credentials. The Serving MD-IS forwards the credentials to the M-ES home MD-IS via a CLNP network (if the M-ES is roaming). This is accomplished via the Redirect Request (RDR) message. One purpose of this message is to instruct the home MD-IS to redirect data destined for the M-ES through this serving area in which the M-ES is currently located. The HMD-IS compares the M-ES's credentials with those stored in a database, and responds to the Serving MD-IS whether access should be granted. This indication is given in the form of the Redirect Confirm (RDC) message. The serving MD-IS sends an Intermediate System Confirm (ISC) message to the M-ES indicating whether the M-ES may begin transmitting and receiving data over the CDPD network.

Referring now to FIG. 7C, CDPD mobile registration signaling according to the invention is shown. The signaling is the same between the M-ES and the SMD-IS (ESH and ISC) but rather than the SMD-IS sending the RDR message to the HMD-IS in the home network, the SMD-IS sends it to a HMD-IS in its own network (local HMD-IS). Then, the local HMD-IS sends a modified RDR message (RDR') to the home HMD-IS. Modification to the RDR to generate RDR' includes changing the Forwarding Network Address field to indicate the IP address of the local HMD-IS. This allows the home HMD-IS to keep a record. Also, a Route Optimization field is added to the RDR to inform the home HMD-IS that route optimization is invoked. The home HMD-IS then responds with a redirect confirmation message (RDC) to the local HMD-IS, which then sends an RDC message to the SMD-IS. Mobile registration is completed when the SMD-IS sends the ISC message to the M-ES. Accordingly, the local HMD-IS, rather than the home HMD-IS, is published to the outside world (e.g., external networks containing CHs) as the shortest path to the M-ES. This is accomplished by the home HMD-IS sending Binding Update messages to CHs indicating that the local HMD-IS is the shortest path to the M-ES.

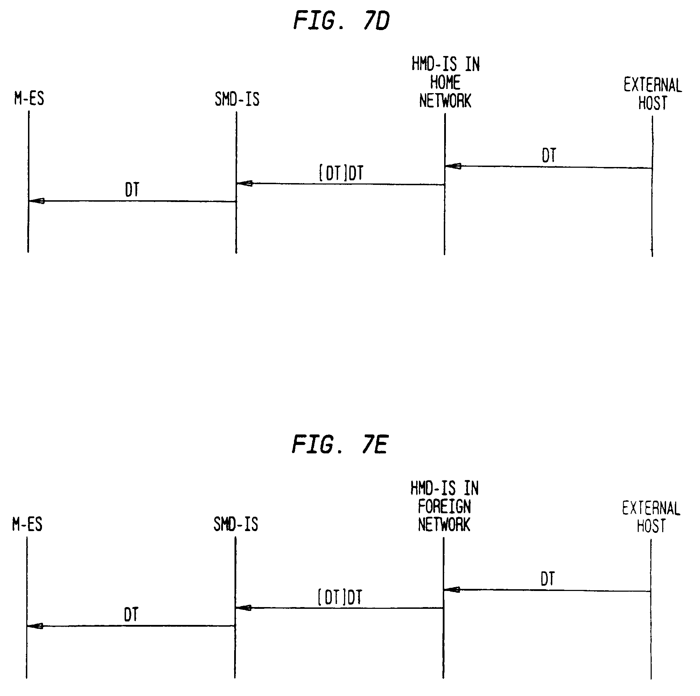

Referring now to FIGs. 7D and 7E, flow diagrams contrasting packet routing in the conventional CDPD network and optimized packet routing in a CDPD network according to the invention are shown. In the conventional arrangement, once routing information is advertised to external networks, a CH can send data to the M-ES. The CH sends a packet (DT) with the M-ES's address as the destination and its own address as the source. Since, in the conventional arrangement, the home HMD-IS advertises itself as the shortest path, the packet is routed there. The home HMD-IS encapsulates the packet ([DT]DT) for transmission through a CLNP tunnel established with the SMD-IS. The SMD-IS de-encapsulates the packet and sends it to the MS over the radio network. However, in accordance with the invention and as shown in FIG. 7E, since the local HMD-IS is advertised as the shortest path, the CH routes the packet to the local HMD-IS, which then encapsulates and transmits the packet over a CLNP tunnel (or, e.g., IP-in-IP tunnel) it has established with the SMD-IS. The SMD-IS then de-encapsulates the packet and sends it to the MS over the radio network.

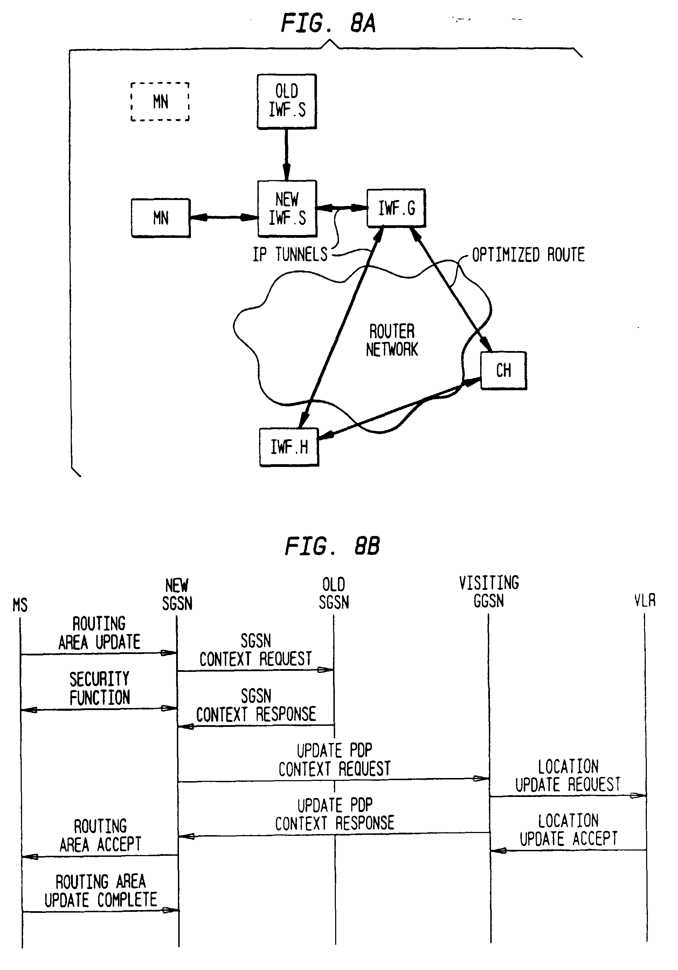

Referring now to FIG. 8A, a block diagram illustrating handoffs using the route optimization methodology of the invention is shown. To facilitate the discussion of illustrating handoff according to the invention with respect to both GPRS and CDPD, we adopt a new set of terminology for the various network elements: mobile node (MN) and Inter-Working Function (IWF). The terminology mapping is shown in Table I below.

**TABLE I**

| | CDPD | GPRS |
|---|---|---|
| Mobile Node (MN) | Mobile End System | Mobile Station |
| Home IWF (IWF.H) | Home MD-IS | Gateway GSN |
| Serving IWF (IWF.S) | Serving MD-IS | Serving GSN |
| Gateway IWF (IWF.G) | Local HMD-IS | Visiting GGSN |

With the route optimization techniques of the invention described above and referencing the new terminology presented in Table I above, it is to be appreciated that when a mobile node moves and attaches itself to a new Serving IWF, the IWF providing the forwarding has not changed. Hence, the binding stored in the corresponding host is still valid. However, a new tunnel is needed between the Home IWF and the new Serving IWF. If the home and the visiting networks are separated by large distances, the signaling cost will be high and the delay in setting up the new tunnel will result in inefficient network resource usage.

A better solution is to use the gateway IWF as the anchoring point in the visiting network so that the tunnels from the home IWF and the corresponding hosts will not be affected by the movement of the mobile node. When the mobile node attaches itself to a new serving IWF, the gateway IWF merely sets up a new tunnel within the same network. In fact, tunnels may be pre-configured between the gateway IWF and all serving IWF belonging to the same network, so the interruption in packet delivery due to mobility is minimized.

Referring to FIG. 8B, a flow diagram illustrating handoff signaling according to the invention in a GPRS network, such as shown in FIG. 6A (with parenthetical reference to FIG. 8A), is shown. The MS 40 (MN) sends a Routing Area Update message to the new SGSN (new IWF.S). The new SGSN then negotiates a SGSN Context Request messages with the old SGSN (old IWF.S). Also, the new SGSN sends an Update PDP Context Request to the visiting GGSN 60 (IWF.G), which sends back an appropriate response. The visiting GGSN then updates the VLR with a Location Update Request. This informs the VLR of the change in serving nodes (from new SGSN to old SGSN). In this manner, the visiting GGSN 60 serves as an anchoring point in the handoff of the MS 40 from the old SGSN to the new SGSN when the MS moves from one routing area to another.

## Claims

1. A method of route optimization, in a GPRS network, for use in a support node in a network, within the GPRS network, in which a mobile station is currently visiting, the method comprising the steps of:
establishing a communication path between the support node in the visiting network and a serving support node in the visiting network, the serving support node being in direct communication with the mobile station; and
routing a packet received directly from an external packet data network to the serving support node for transmission to the mobile station.

2. The method of Claim 1, further comprising the step of routing a packet received from the serving support node to the external data network.

3. The method of Claim 1, wherein a tunneling protocol is used to establish the communication path between the support node in the visiting network and the serving support node in the visiting network.

4. The method of Claim 3, wherein the tunneling protocol is an IP-in-IP encapsulation protocol.

5. The method of Claim 3, wherein the tunneling protocol is a minimal encapsulation protocol.

6. The method of Claim 3, wherein the tunneling protocol is a generic routing encapsulation protocol.

7. The method of Claim 1, wherein the establishing step further comprises mapping a communication path identifier and an address associated with the serving support node to an address assigned to the mobile station.

8. The method of Claim 1, wherein a tunneling protocol is used to establish the communication path between the support node in the visiting network and the serving support node in the visiting network such that the visiting support node encapsulates packets received from the external packet data network and de-encapsulates packets received from the serving support node.

9. The method of Claim 1, wherein the establishing step further comprises receiving an activation request message from the serving support node, the request message including a route optimization establishment field.

10. The method of Claim 9, wherein the establishing step further comprises sending an activation request response message to the serving support node.

11. The method of Claim 1, wherein the establishing step further comprises sending an update location message to a location register in a network, within the GPRS network, in which a mobile station is originally registered.

12. The method of Claim 1, wherein the visiting support node is used as an anchoring point in a handoff procedure involving the mobile station.

13. The method of Claim 1, wherein a support node in a network, within the GPRS network, in which a mobile station is originally registered sends a binding update message to the external packet data network advertising the visiting support node as the optimal path to the mobile station.

14. Apparatus for route optimization in a GPRS network, comprising:
packet equipment, located in a network within the GPRS network, configured to carry out a method as claimed in any of the preceding claims.

15. A method of route optimization, in a CDPD network, for use in an intermediate system node in a network, within the CDPD network, in which a mobile end system node is currently visiting, the method comprising the steps of:
establishing a communication path between the intermediate system node in the visiting network and a serving intermediate system node in the visiting network, the serving node being in direct communication with the mobile node; and
routing a packet received directly from an external network to the serving node for transmission to the mobile node.

16. The method of Claim 15 further comprising the step of routing a packet received from the serving node to the external network.

17. The method of Claim 15 wherein a tunneling protocol is used to establish the communication path between the intermediate system node in the visiting network and the serving node in the visiting network.

18. The method of Claim 17, wherein the tunneling protocol is an IP-in-IP encapsulation protocol.

19. The method of Claim 17, wherein the tunneling protocol is a minimal encapsulation protocol.

20. The method of Claim 17, wherein the tunneling protocol is a generic routing encapsulation protocol.

21. The method of Claim 15, wherein a tunneling protocol is used to establish the communication path between the intermediate system node in the visiting network and the serving node in the visiting network such that the visiting intermediate system node encapsulates packets received from the external network and de-encapsulates packets received from the serving node.

22. The method of Claim 15, wherein the establishing step further comprises receiving a redirect request message from the serving node.

23. The method of Claim 22, wherein the establishing step further comprises sending a redirect request message to an intermediate system node in a network, within the CDPD network, in which the mobile node is originally registered, the request message including a route optimization establishment field and an address of the visiting intermediate system node.

24. The method of Claim 15 wherein the visiting intermediate system node is used as an anchoring point in a handoff procedure involving the mobile node.

25. The method of Claim 15 wherein an intermediate system node in a network, within the CDPD network, in which a mobile node is originally registered sends a binding update message to the external network advertising the visiting intermediate system node as the optimal path to the mobile node.

26. Apparatus for route optimization in a CDPD network, comprising:
packet equipment, located in a network within the CDPD network, configured to carry out a method as claimed in any of claims 15 to 25.
